# EUROPÄISCHE PATENTSCHRIFT

(11) **EP 1 414 575 B1**
(45) Veröffentlichungstag und Bekanntmachung des Hinweises auf die Patenterteilung: **27.09.2006**
(21) Anmeldenummer: 02754932.8
(22) Anmeldetag: 24.07.2002
(51) Int. Cl.: B01L 3/02

(54) **VORRICHTUNG ZUM PIPETTIEREN EINER FLÜSSIGKEIT**
DEVICE FOR PIPETTING A LIQUID
DISPOSITIF DE PIPETTAGE D'UN LIQUIDE

(30) Priorität: 24.07.2001 DE 10135963
(43) Veröffentlichungstag der Anmeldung: 06.05.2004
(73) Patentinhaber: Fraunhofer-Gesellschaft zur Förderung der angewandten Forschung e.V., 80636 München (DE)
(72) Erfinder: LISEC, Thomas, 25524 Itzehoe (DE)
(74) Vertreter: Rösler, Uwe
(86) Internationale Anmeldenummer: PCT/EP2002/008248
(87) Internationale Veröffentlichungsnummer: WO 2003/011462

(56) Entgegenhaltungen:
- GB-A- 2 249 171
- US-A- 5 193 403

## Beschreibung

### Technisches Gebiet

Die Erfindung bezieht sich auf eine Vorrichtung zum Pipettieren einer Flüssigkeit mit einem Pipettenkörper, der ein Pipettenvolumen umgibt, in dem ein fluides Medium einbringbar ist und in dem ein das Medium innerhalb des Pipettenvolumens ansteuerbar verdrängender Aktor vorgesehen ist, sowie mit einer Pipettierspitze, die fluiddicht mit dem Pipettenvolumen verbindbar ist.

### Stand der Technik

Beispielweise bei der Untersuchung von Krankheitsbildern oder Routine-Gesundheitskontrollen stützt sich die moderne Medizin zunehmend auf die quantitative Bestimmung relevanter Substanzen in Körperflüssigkeiten. Die Anzahl der zu untersuchenden Substanzen erhöht sich ständig, ebenso wie die Häufigkeit der Tests. Höhere Analysezahlen bei gleichzeitig abnehmenden Kosten erfordern vor allem eine Senkung des Bedarfs an Reagenzien, deren Preis oftmals erheblich ist. Tendenziell ist somit das präzise Dosieren möglichst geringer Flüssigkeitsmengen zentrales Entwicklungsziel.

Hierzu dient das sogenannte High-Throuhput-Screening, das die Untersuchung der Wechselwirkungen eines Wirkstoffes, Moleküls oder einer Zelle mit einer großen Anzahl unterschiedlichster Substanzen auf wirtschaftliche Weise ermöglicht. Dazu werden definierte Volumina entsprechender Lösungen in Mikrotiterplatten, kurz MTP, zur Reaktion gebracht werden. Um schnell und kostengünstig arbeiten zu können, werden die Testvolumina immer weiter miniaturisiert. In einer 1536er Mikrotiterplatte betragen die Volumina nach Zugabe aller Substanzen und Reagenzien heutzutage weniger als 10 *µ*l.

Da das Mischungsverhältnis aus den zu untersuchenden Substanzen und den Reagenzien in weiten Grenzen variieren kann, müssen Flüssigkeitsmengen im sub-µl-Bereich exakt dosiert werden können. Zudem ist es häufig zur Vermeidung von Kontaminationseffekten unumgänglich, daß gerade die Kleinstmengen als erste in die einzelnen voneinander getrennten trockenen Reaktionskammern, den sogenannten Wells, auf der Mikrotiterplatte abgegeben werden müssen.

Muß ein und dieselbe Flüssigkeit auf eine Vielzahl von Wells in gleichen Volumina verteilt werden, lassen sich sehr effektiv piezoelektrische (siehe auch "Nano-Plotter" unter http://www.gesim.de oder "Genesis NPS" unter http://www.tecan.de) oder Inkjet-Mikrodispensier-Systeme (siehe hierzu D. Rose, "Microdispensing technologies in drug discovery", DDT, Vol. 4, No. 9, 1999) einsetzten, die kleinste Tropfen berührungslos in die einzelnen Wells "abschießen" können.

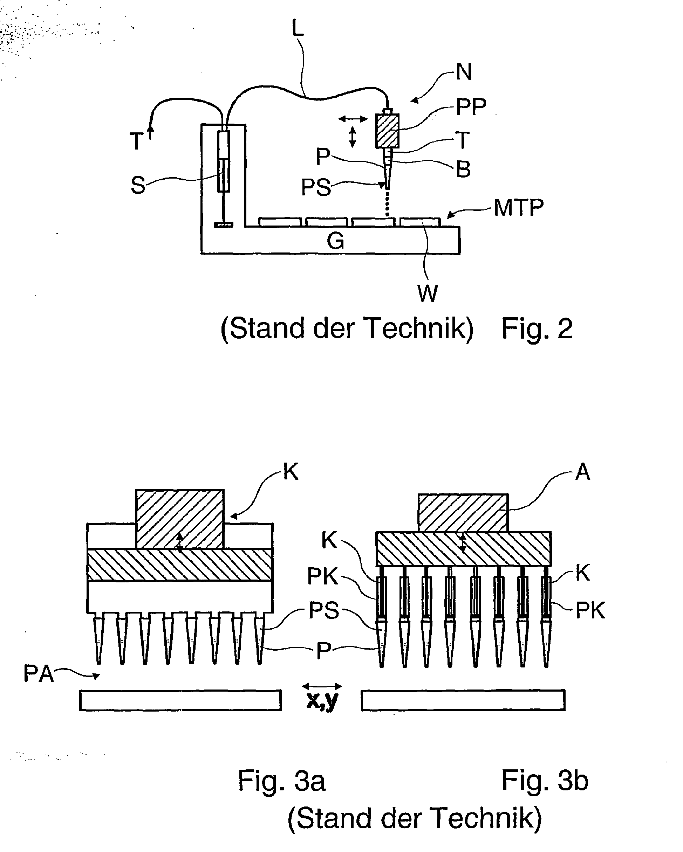

In Figur 2 ist ein an sich bekanntes Tropfen-Dispensiersystem auf der Basis einer piezoelektrischen Pumpe nach dem Stand der Technik dargestellt. Das Dispensiersystem weist eine auf einem Gehäuse G angebrachte Mikrotiterplatte MTP auf, über der räumlich verschwenkbar ein Nadelpipetierer N mit einem einzigen Pipettenkanal vorgesehen ist. Innerhalb des Gehäuses G ist eine Spritzenpumpe S vorgesehen, die über einen flüssigkeitsgefüllten Schlauch L Trägerflüssigkeit T zum Nadelpipettierer N zuführt. Der Nadelpipettierer N weist eine Piezo-Pumpe PP auf, durch die die Trägerflüssigkeit T innerhalb des Nadelpipettierers N in Schwingungen versetzbar ist. Getrennt durch eine Luftblase B ist eine Flüssigprobe P in der Pipettierspitze PS von der Trägerflüssigkeit T getrennt. Angeregt durch die Druckschwingungen innerhalb der Trägerflüssigkeit T werden auf diese Weise kleinste Probenflüssigkeitstropfen in die einzelnen Wells W auf der Mikrotiterplatte MTP abgeschossen.

Nachteilig ist, daß funktionsbedingt ein vergleichsweise großes, minimales Probenvolumen von einigen *µ*l in die Pipettierspitze aufgenommen werden muß. Soll nur einmal eine Kleinstmenge an Probenflüssigkeit abgeben werden, geht somit ein Großteil des unter Umständen sehr teueren Probenmaterials verloren. Weiterhin ist es schwierig, viskose Flüssigkeiten auf diese Wesie zu dosieren. Die Piezopumpen sind darüberhinaus sehr teuer und wurden bisher nur 8-fach parallel aufgebaut. Bekannt sind ferner Pipettieranordnungen der Firma Cartesian Technologies mit 96 Pipetten, jedoch ist der technische Aufwand enorm, da pro Pipettierkanal jeweils eine Spritzenpumpe erforderlich ist. Die Störanfälligkeit der vorstehend genannten Techniken ist erheblich, zudem ist eine Kontrolle des Dosierprozesses nur begrenzt möglich.

Müssen hingegen eine Vielzahl verschiedener Proben einmalig übertragen werden, z.B. eine MTP kopiert oder umformatiert werden, verwendet man nach wie vor Pipettiergeräte nach dem sogenannten Verdrängerprinzip, die mit 96 oder 384 Kanälen parallel ausgestattet sind. Hierzu ist in Fig. 3 a und Fig. 3b jeweils ein kolbengetriebenes Pipettenarray dargestellt. In Fig. 3a dient ein einzelner großer Kolben K als Antrieb für das gesamte Pipettenarray PA, wie z. B. bei den Geräten von CyBio AG, siehe "Cybi-Well 2000" unter http://www.cybio-ag.com. Die Proben werden über ein Luftpolster angesaugt bzw. abgegeben. Da Einweg-Plastikspitzen PS verwendet werden können, ist die Gefahr einer Kontamination durch Verschleppung von Probenresten sehr gering. Aufgrund der Elastizität des relativ großen Luftpolsters ist das minimale Pipettenvolumen auf ca. 1 µl beschränkt. In Fig. 3b ist jeder einzelne Pipettierkanal PK mit einem separaten Kolben K versehen, der durch einen gemeinsamen Antrieb A bewegt wird, wie z. B. bei den Geräten "Hydra" von Robbins ltd., unter http://www.robsci.com. Da die Proben in diesem Fall nahezu ohne Luftpolster manipuliert werden, lassen sich sub-*µ*l-Volumina übertragen.
Jedoch werden anstelle von auswechselbaren Plastikspitzen PS spezielle, fest arretierte Stahlnadeln verwendet, die nach jedem Pipettiervorgang eine aufwendige Spülprozedur erfordern.

Da es mit keinem der bekannten Pipettiersystemen möglich ist zu überprüfen, wieviel Probenflüssigkeit beim Pipetiervorgang in jedes einzelen Well tatsächlich abgegeben worden ist, muß stets sichergestellt sein, daß sich die Volumenänderung aufgrund der Kolbenbewegung unverfälscht und gleichmäßig in die Pipettierspitzen überträgt. Bei allen bekannten Pipettiergeräten, die im Array arbeiten, sind die Pipettierspitzen daher starr am Pipettenkopf, in dem der Kolben vorgesehen ist, befestigt. Mehrweg-Spitzen werden an den Pipettenkopf fest angeschraubt, Einweg-Platikspitzen werden hingegen auf einer Aufnahmeplatte mit entsprechenden Stuzen bewegungsfest aufgesteckt oder geklemmt.

Um sicher gewährleisten zu können, dass von jeder einzelnen Pipettierspitze eine gewünschte Probenflüssigkeitsmenge in den entsprechenden Well übertragen wird, muß ferner dafür gesorgt werden, dass die Pipettierspitze oder zumindest die abgesonderte Flüssigkeitsmenge, die die Pipettierspitze überragt, die Oberfläche des Wells berührt, möchte man auf eine Technik des Tropfenabschießens - wie eingangs unter Verweis auf Figur 2 erwähnt - verzichten. Grundsätzlich sind genau arbeitende X-Y-Z-Positioniervorrichtungen für Mikropipetiereinheiten relativ zu MTPs bekannt, doch treten Schwierigkeiten dort auf, wo die MTP räumlich gewölbt bzw. verzogen ist. So kommen unter Umständen nicht alle Pipettierspitzen eines Arrays bzw. die abgesonderten Probenmengen mit dem Boden der Wells in Kontakt. In einigen Fällen wird folglich keine Probenflüssigkeit auf die MPT übertragen, die Probe bleibt vielmehr an der Spitze hängen. Fehler dieser Art treten spontan auf und können nur noch durch eine visuelle Kontrolle der fertig pipettierten MTP erkannt werden.

Die Firma. Robbins ltd. (http://www.robsci.com) hat zur Vermeidung vorstehenden Problems eine spezielle Lösung gefunden. Die langen und dünnen, aus Stahl gefertigten Pipettennadeln werden mit etwas Überhub auf den Boden der MTP abgesetzt, so daß sie sich geringfügig elastisch verbiegen. Dadurch wird sichergestellt, daß wirklich alle Spitzen den Boden der Wells berühren. Sollen hingegen Einweg-Plastikspitzen zum Pipettieren benutzt werden, funktioniert diese Technik nicht, zumal Standard-Plastikspitzen sehr starr sind. Sie würden sich bei entsprechender starker Belastung irreversibel verformen, sich aber nicht verbiegen.

### Darstellung der Erfindung

Insbesondere im Hinblick auf die eingangs beschriebene Untersuchungsweise einer Vielzahl von Substanzen im Wege des High-Throughput Screening gilt es sicherzustellen, dass der Flüssigkeitsübertrag von jeder einzelnen Pipettierspitze auf das ihr zugeordnete Well einer Mikrotiterplatte zuverlässig erfolgt, auch im Falle einer möglicherweise uneben ausgebildeten Mikrotiterplatte. Im Einzelnen gilt es eine Vorrichtung zum Pipettieren einer Flüssigkeit mit einem Pipettenkörper, der ein Pipettenvolumen umgibt, in dem ein fluides Medium einbringbar ist und in dem ein das fluide Medium innerhalb des Pipettenvolumens ansteuerbar verdrängender Aktor vorgesehen ist, sowie einer Pipettierspitze, die fluiddicht mit dem Pipettenvolumen verbindbar ist, derart auszubilden, dass mit konstruktiv einfachen sowie kostengünstigen technischen Aufwendungen sicherzustellen ist, dass die Pipettierspitze eine für den Flüssigkeitsübertrag von der Pipettierspitze auf den Boden eines Wells erforderlichen Kontakt eingeht. Eine derartige Vorrichtung, die zunächst eine einzelne Pipette betrifft, soll insbesondere in gleicher Weise auf eine arrayförmige Anordnung von einer Vielzahl von Pipetten übertragbar sein. Insofern gilt es in gleicher Weise ein entsprechendes Pipettenarray anzugeben.

Die Lösung der der Erfindung zugrundeliegenden Aufgabe ist im Anspruch 1 abgegeben. Gegenstand des Anspruchs 10 ist ein erfindungsgemäß ausgebildetes Pipettenarray. Vorteilhafte Merkmale sind Gegenstand der Unteransprüche sowie der Beschreibung unter Bezugnahme auf die Figuren zu entnehmen.

Insbesondere soll es möglich sein, EinwegPipettierspitzen austauschbar mit dem entsprechenden Pipettenkörper zu verbinden.

Erfindungsgemäß ist eine Vorrichtung zum Pipettieren einer Flüssigkeit mit einem Pipettenkörper, der ein Pipettenvolumen umgibt, indem ein fluides Medium einbringbar ist und in dem ein das Medium innerhalb des Pipettenvolumens ansteuerbar verdrängender Aktor vorgesehen ist, sowie einer Pipettierspitze, die fluiddicht mit dem Pipettenvolumen verbindbar ist, derart ausgebildet, dass das Pipettenvolumen und die Pipettierspitze über ein fluiddichtes Verbindungsmittel mittel- oder unmittelbar derart miteinander verbunden sind, dass die Pipettierspitze relativ zum Pipettenvolumen bewegbar ist.

Der Erfindung zugrundeliegenden Idee ist die mechanische Entkopplung zwischen Pipettierspitze und Pipettenkörper, so dass die Pipettierspitze nahezu freibeweglich aber vorzugsweise längs einer Linearachse bewegt werden kann. Der erfindungsgemäße Gedanke soll anhand nachstehender Ausführungsbeispiele unter Verweis auf die folgenden Figuren erklärt werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:
- Fig. 1: bevorzugtes Ausführungsbeispiel eines Pipettiersystems mit einer Vielzahl einzelner Pipetten,
- Fig. 2: Darstellung eines Tropfen-Dispensersystems gemäß Stand der Technik,
- Fig. 3a, b: Darstellung kolbengetriebener Pipettenarrays gemäß Stand der Technik,
- Fig. 4a - c: Sequenzdarstellungen zum Absenken arrayförmig angeordneter Pipettierspitzen auf eine unebene Arbeitsoberfläche.

### Wege zur Ausführung der Erfindung, gewerbliche Verwendbarkeit

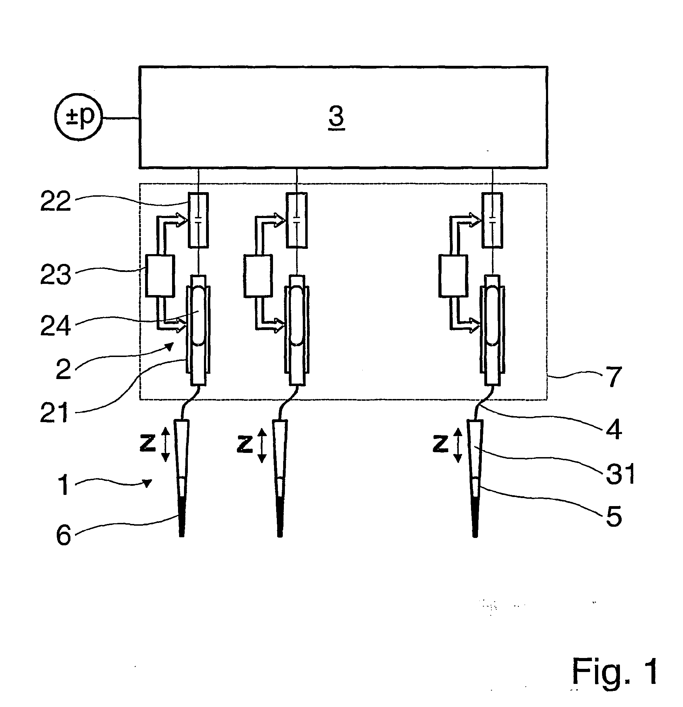

In Figur 1 ist eine schematische Darstellung eines Pipettiersystems dargestellt, das eine Vielzahl linear oder arrayförmig angeordneter Pipettierspitzen 1, eine entsprechende Vielzahl, jeder einzelnen Pipettierspitzen 1 zugeordneten Pipettenkörper 2 sowie ein Reservoirvolumen 3 aufweist, zur Verfügungsstellung eines fluiden Mediums in Form einer Systemflüssigkeit.

Im gezeigten Ausführungsbeispiel besteht jeder einzelner Pipettenkörper aus einem Pipettenvolumen 21, der mit einem Aktor 22 verbunden ist, der in Form eines Ventil dosiert die Systemflüssigkeit 31 in das Pipettenvolumen 21 zuführt. Überdies sieht der Pipettenkörper 2 einen Füllstandssensor 23 vor, der insbesondere in der DE 199 44 331 A1 beschrieben ist. Der Füllstandssensor 23 setzt sich aus einem Detektorsystem zusammen, das eine innerhalb des Pipettenvolumens vorhandene Phasengrenze zwischen der Systemflüssigkeit 31 und einer innerhalb des Pipettenvolumens eingeschlossenen Luftblase 24 erfasst. Mit Hilfe einer als ASIC ausgebildeten Überwachungselektronik, auf die im weiteren nicht eingegangen wird, vielmehr wird in diesem Zusammenhang auf vorstehende DE 199 44 331 A1 verwiesen, wird in Abhängigkeit des detektierten aktuellen Füllstandes innerhalb des Pipettenvolumens der als Ventil ausgebildete Aktor 22 angesteuert. Die innerhalb des Pipettenvolumens 21 eingeschlossene Luftblase 24 ist dabei beidseitig von der Systemflüssigkeit 31 eingeschlossen.

Jede einzelne Pipettierspitze 1 ist mit dem Pipettenvolumen 2 über ein flexibel ausgebildetes, fluiddichtes Verbindungsmittel 4 verbunden, das vorzugsweise als flexibler Schlauch ausgebildet ist, der selbst über nur eine geringe oder vorzugsweise keine Dehnbarkeit verfügt, um Volumenänderungen innerhalb des Schlauches aufgrund auftretender hoher Schlauchinnendrucke ausschließen zu können. Die Systemflüssigkei 31 gelangt auf diese Weise über den schlauch 4 in die Pipettenspitze, in der sie wiederrum durch eine Luftblase 5 einseitig begrenzt ist. Die Luftblase 5 begrenzt ihrerseits eine Menge an Probenflüssigkeit 6, die es gilt durch den Pipettiervorgang in einen trockenen Well zu übertagen.

Da die Kräfte bzw. Drücke, die zur Bewegung der Luftblase 24 und somit auch der Systemflüssigkeit 31 innerhalb des Pipettenvolumens 21 erforderlich sind, nur sehr gering sind, können die Pipettierspitzen 1 ohne größere weitere Vorkehrungen jeweils am flexiblen Schlauchstück 4 angekoppelt werden. Somit sind sie nicht fest mit dem Pipettenkörper 2 verbunden und können je nach Länge des Verbindungsschlauches 4 gegenüber dem Pipettenkörper bspw. im mm-Bereich bewegt werden, ohne dass sich die Pipettiergenauigkeit, bspw. aufgrund der Deformation des Verbindungsschlauches wesentlich verschlechtert. Bei der Materialwahl des Verbindungsschlauches 4 ist daher darauf zu achten, dass Schlauchmaterialien eingesetzt werden, die über eine vernachlässigbare Volumendeformation während einer entsprechenden Krümmung des Schlauches verfügen. Durch entsprechende Ansteuerung des Aktors wird die Luftblase 5 vermittels der Systemflüssigkeit in Richtung Pipettensitzenöffnung bewegt, wodurch die Probenflüssigkeit 6 aus der Pipettierspitze verdrängt wird. Der Verdrängungsvorgang läuft aufgrund des Füllstandssensors exakt kontrolliert ab, so dass vermieden werden kann, dass auch Systemflüssigkeit aus der Pipettierspitzenöffnung ausgetragen wird.

Die Pipettenkörper 2 aller in der Figur 1 linear- bzw. arrayförmig angeordneten Pipetten sind innerhalb einer Baueinheit 7 (siehe gestrichelte Umrandung) gemeinsam gelagert.

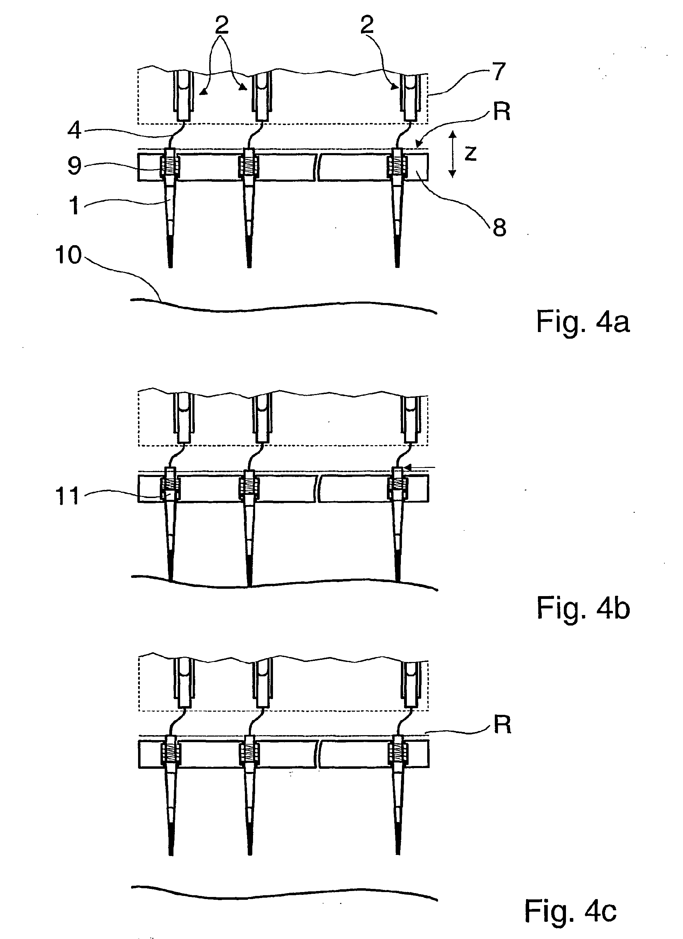

In vorteilhafter Ausführung ist auch eine gemeinsame Lagerung aller Pipettierspitzen 1 vorgesehen, wie sie in Figur 4a-c abgebildet ist.

In den Figuren 4a-c sind die einzelnen Pipettierspitzen 1 in einer einheitlichen Aufnahmevorrichtung 8 federnd gelagert dargestellt. Der Abstand zwischen der Aufnahmevorrichtung 8 und der Baueinheit 7, in der die einzelnen Pipettenkörper 2 angeordnet sind, ist fest definiert und beträgt maximal die Länge eines einzelnen Verbindungsschlauches 4. Jede einzelne Pipettierspitze 1 ist in z-Richtung federkraftbeaufschlagt gelagert und kann beim Aufsetzen auf den Boden eines Wells zur Probenflüssigkeitsabgabe in z-Richtung nach oben ausgelenkt werden. Der Federeffekt, mit dem jede einzelne Pipettierspitze 1 innerhalb der Aufnahmevorrichtung 8 gelagert ist, kann durch die Eigenelastizität des Verbindungsschlauches 4 herrühren oder, wie im Ausführungsbeispiel gemäß der Figuren 4 gezeigt, durch ein Federelement 9, das in der Aufnahmevorrichtung 8 für jede Pipettierspitze 1 vorgesehen ist, zustande kommen.

Die federnde Lagerung kann grundsätzlich für jede einzelne Pipettierspitze 1, wie dargestellt, aber auch, je nach Pipettierprozess, für Gruppen von Pipettierspitzen zusammengefasst realisiert werden.

In der Sequenzdarstellung gemäß Figur 4a befindet sich die Pipettenanordnung kontaktfrei über einer unebenen Oberfläche 10. Die einzelnen Pipettierrspitzen 1 nehmen aufgrund der federkraftbeaufschlagten Lagerung eine Ruheslage R ein (siehe hierzu gepunktete Linie).

In Figur 4b werden die einzelnen Pipettierspitzen 1 zur Probenabgabe gegen die Arbeitsoberfläche 10 gedrückt, so dass die einzelnen Pipettierspitzen 1 entgegen der Federkraft jedes einzelnen Federelementes 9 relativ zur Ruhelage R in z-Richtung ausgelenkt werden. Je nach Absenktiefe jeder einzelnen Pipettierspitze 1 ist die Auslenkung in z-Richtung für jede Pipettierspitze 1 unterschiedlich groß (siehe Pfeil).

In Figur 4c ist der Pipettiervorgang abgeschlossen und der die Pipettenanordnung von der Arbeitsoberfläche 10 abgehoben, wobei die Pipettierspitzen in ihre Ruhelage R zurückkehren.

Durch die erfindungsgemäße Lagerung jeder einzelnen Pipettierspitze wird erreicht, dass stets alle Pipettierspitzen des Pipettenarrays den Boden der Wells einer Mikroplatte berühren, selbst wenn die Mikroplatte uneben ausgeführt ist.

Grundsätzlich ist es möglich, die Pipettierspitzen 1 einstückig auszuführen und in die Aufnahmevorrichtung 8 für einen vielfach wiederholenden Pipettiervorgang zu integrieren. Die erfordert jedoch eine gewissenhafte Reinigung der Pipettierspitzen zwischen zwei aufeinanderfolgenden Pipettiervorgängen.

Ferner ermöglicht die erfindungsgemäße Vorrichtung auch die Verwendung von Einweg-Pipettierspitzen, die einen nach erfolgter Pipettierung erforderlichen Waschvorgang unnnötig machen. Hierzu sieht die Aufnahmevorrichtung 8 Zwischenstücke 11 vor, die über eine entsprechende Lagerung, bspw. mit Hilfe des Federelementes 9 in der Aufnahmevorrichtung 8 integriert sind. An das jeweilige Zwischenstück 11 kann über einen entsprechenden Anschlussstutzen eine jeweilige, als Einweg-Pipettierspitze ausgebildete Spitze angeklemmt bzw. angeschraubt werden.

### Bezugszeichenliste

- 1: Pipettierspitze
- 2: Pipettenkörper
- 21: Pipettenvolumen
- 22: Aktor
- 23: Füllstandssensor
- 24: Luftblase
- 3: Reservoirvolumen
- 31: Spülflüssigkeit (fluides Medium)
- 4: flexibles, fluiddichtes Verbindungsmittel
- 5: Luftblase
- 6: Probenflüssigkeit
- 7: Baueinheit
- 8: Aufnahmevorrichtung
- 9: Federelement
- 10: Arbeitsoberfläche
- 11: Zwischenstück

## Patentansprüche

1. Vorrichtung zum Pipettieren einer Flüssigkeit mit einem Pipettenkörper (2), der ein Pipettenvolumen (21) umgibt, in dem ein fluides Medium einbringbar ist und in dem ein das Medium innerhalb des Pipettenvolumens ansteuerbar verdrängender Aktor (22) vorgesehen ist, sowie einer Pipettierspitze (1), die fluiddicht mit dem Pipettenvolumen verbindbar ist,
**dadurch gekennzeichnet, dass** das Pipettenvolumen (21) und die Pipettierspitze über ein fluiddichtes Verbindungsmittel (4) mittel- oder unmittelbar derart miteinander verbunden sind, dass die Pipettierspitze relativ zum Pipettenvolumen bewegbar ist.

2. Vorrichtung nach Anspruch 1,
**dadurch gekennzeichnet, dass** das fluiddichte Verbindungsmittel flexibel ist.

3. Vorrichtung nach Anspruch 1 oder 2,
**dadurch gekennzeichnet, dass** das fluiddichte Verbindungsmittel ein flexibler Schlauch ist mit einer geringen oder keinen Dehnbarkeit.

4. Vorrichtung nach einem der Ansprüche 1 bis 3,
**dadurch gekennzeichnet, dass** eine Aufnahmevorrichtung für die Pipettierspitze vorgesehen ist, in der die Pipettierspitze wenigstens einachsig beweglich gelagert ist, und
dass die Aufnahmevorrichtung einen gegenüber dem Pipettenkörper festen Abstand aufweist.

5. Vorrichtung nach Anspruch 4,
**dadurch gekennzeichnet, dass** die Pipettierspitze Federkraft-beaufschlagt in der Aufnahmevorrichtung gelagert ist und aus einer Ruhelage mittels Krafteinwirkung gegen die Federkraft relativ zur Aufnahmevorrichtung auslenkbar ist.

6. Vorrichtung nach einem der Ansprüche 1 bis 5,
**dadurch gekennzeichnet, dass** die Pipettierspitze einstückig ausgebildet ist und unmittelbar mit dem fluiddichten Verbindungsmittel verbunden ist.

7. Vorrichtung nach Anspruch 4 oder 5,
**dadurch gekennzeichnet, dass** in der Aufnahmevorrichtung ein Zwischenstück vorgesehen ist, das wenigstens einachsig beweglich gelagert in der Aufnahmevorrichtung integriert ist, an das einerseits das fluiddichte Verbindungsmittel und andererseits eine auswechselbare Pipettierspitze anbringbar ist.

8. Vorrichtung nach einem der Ansprüche 1 bis 7,
**dadurch gekennzeichnet, dass** das fluide Medium ein Gas oder eine Flüssigkeit ist.

9. Vorrichtung nach einem der Ansprüche 1 bis 8,
**dadurch gekennzeichnet, dass** in dem Pipettenkörper ein Füllstandssensor, insbesondere gemäß der DE 199 44 331 A1, vorgesehen ist.

10. Pipettenarray bestehend aus einer Anzahl arrayförmig angeordneter Vorrichtungen nach einem der Ansprüche 1 bis 9,
**dadurch gekennzeichnet, dass** die Anzahl der Pipettenkörper eine feste räumliche Zuordnung untereinander aufweisen, und
dass wenigstens eine arrayförmige Gruppe aus der Anzahl der Pipettierspitzen in einer Aufnahmevorrichtung gemeinsam gelagert sind.

11. Pipettenarray nach Anspruch 10,
**dadurch gekennzeichnet, dass** die Anzahl der Pipettierspitzen in einer einzigen Aufnahmevorrichtung derart gelagert sind, dass die Pipettierspitzen parallel zueinander linearbeweglich bewegbar sind.

12. Pipettenarray nach Anspruch 10 oder 11,
**dadurch gekennzeichnet, dass** die Pipettierspitzen derart zueinander gelagert sind, dass in einer Ruhestellung die Spitzen der Pipettierspitzen in einer Ebene liegen.

## Claims

1. A device for pipetting a liquid, comprising a pipette body (2) enclosing a pipette volume (21), into which a fluid medium can be placed and in which an actuator (22) that controllably displaces said medium in said pipette volume is provided, as well as a pipette tip (1), which can be connected to said pipette volume in an fluid-tight manner,
**wherein** said pipette volume (21) and said pipette tip are connected via a fluid-tight connecting means (4) directly or indirectly to each other in such a manner that said pipette tip is moveable relative to said pipette volume.

2. A device according to claim 1,
**wherein** said fluid-tight connecting means is flexible.

3. A device according to claim 1 or 2,
**wherein** said fluid-tight connecting means is a flexible tube possessing little or no expandability.

4. A device according to one of the claims 1 to 3,
**wherein** a holding unit, in which said pipette tip is borne at least uniaxially moveable, is provided for said pipette tip, and
said holding unit and said pipette body are spaced apart a fixed distance.

5. A device according to claim 4,
**wherein** said pipette tip is borne spring-tensioned in said holding unit and can be moved relative to said holding device out of an idle position by means of force acting against said spring force.

6. A device according to one of the claims 1 to 5,
**wherein** said pipette tip is designed one-piece and is connected directly to said fluid-tight connecting means.

7. A device according to claim 4 or 5,
**wherein** in said holding unit, an intermediate piece, to which, on the one hand, said fluid-tight connecting means and, on the other hand, a replaceable pipette tip can be attached, is provided and borne in said holding unit at least uniaxially moveable.

8. A device according to one of the claims 1 to 7,
**wherein** said fluid medium is a gas or a liquid.

9. A device according to one of the claims 1 to 8,
**wherein** a depletion level sensor, in particular according to DE 199 44 331 A1, is provided in said pipette body.

10. A pipette array comprising a multiplicity of array-like arranged devices according to one of the claims 1 to 9,
**wherein** the multiplicity of said pipette bodies have a spatially fixed arrangement relative to one another, and
at least one array-like group of said multiplicity of said pipette tips is borne together in a holding unit.

11. A pipette array according to claim 10,
**wherein** said multiplicity of pipette tips are borne in a single said holding unit in such a manner that said pipette tips are linearly moveable in parallel.

12. A pipette array according to claim 10 or 11,
**wherein** said pipette tips are borne relative to each other in such a manner that the tips of said pipette tips lie in one plane in an idle position.

## Revendications

1. Dispositif de pipetage d'un liquide, comportant un corps de pipette (2) entourant un volume de pipette (21), dans lequel peut être introduit un fluide liquide et dans lequel il est prévu un acteur (22) refoulant de manière contrôlable le fluide à l'intérieur du volume de pipette, ainsi qu'une pointe de pipetage (1) qui peut être reliée de manière étanche au fluide au volume de pipette,
**caractérisé en ce que** le volume de pipette (21) et la pointe de pipette sont reliés indirectement ou directement entre eux par un moyen de liaison étanche au fluide (4) de manière à ce que la pointe de pipetage soit mobile par rapport au volume de pipette.

2. Dispositif selon la revendication 1,
**caractérisé en ce que** le moyen de liaison étanche au fluide est souple.

3. Dispositif selon la revendication 1 ou 2,
**caractérisé en ce que** le moyen de liaison étanche au fluide est un tuyau souple à faible extensibilité ou dépourvu d'extensibilité.

4. Dispositif selon une des revendications 1 à 3,
**caractérisé en ce qu'**il est prévu pour la pointe de pipetage un dispositif récepteur dans lequel la pointe de pipetage s'appuie de manière mobile sur au moins un axe et
que le dispositif récepteur est situé à une distance fixe du corps de pipette.

5. Dispositif selon la revendication 4,
**caractérisé en ce que** la pointe de pipetage s'appuie sous charge de ressort dans le dispositif récepteur et peut être déviée depuis une position de repos au moyen d'une force exercée à l'encontre de la force de ressort par rapport au dispositif récepteur.

6. Dispositif selon une des revendications 1 à 5,
**caractérisé en ce que** la pointe de pipetage est réalisée en un bloc et est reliée directement au moyen de liaison étanche au fluide.

7. Dispositif selon la revendication 4 ou 5,
**caractérisé en ce qu'**il est prévu dans le dispositif récepteur une entretoise qui est intégrée en appui mobile au moins sur un axe dans le dispositif récepteur et sur laquelle on peut poser d'une part le moyen de liaison étanche au fluide et d'autre part une pointe de pipetage échangeable.

8. Dispositif selon une des revendications 1 à 7,
**caractérisé en ce que** le fluide liquide est un gaz ou un liquide.

9. Dispositif selon une des revendications 1 à 8,
**caractérisé en ce qu'**il est prévu dans le corps de pipette un capteur de niveau de remplissage, notamment suivant le document DE 199 44 331 A1.

10. Réseau de pipettes composé d'une série de dispositifs disposés en réseau selon une des revendications 1 à 9,
**caractérisé en ce que** la série de corps de pipettes sont associés entre eux de manière fixe dans l'espace et
qu'au moins un groupe en réseau de la série de pointes de pipetage s'appuient ensemble dans un dispositif récepteur.

11. Réseau de pipettes selon la revendication 10,
**caractérisé en ce que** la série de pointes de pipetage s'appuient dans un seul dispositif récepteur de manière à ce que les pointes de pipetage soient mobiles de manière mobile linéairement parallèlement les unes aux autres.

12. Réseau de pipettes selon la revendication 10 ou 11,
**caractérisé en ce que** la série de pointes de pipetage s'appuient les unes par rapport aux autres de manière à ce qu'en position de repos, les bouts des pointes de pipetage reposent dans un plan.
